# FASCICULE DE BREVET EUROPEEN

(11) **EP 3 886 643 B1**
(45) Date de publication et mention de la délivrance du brevet: **26.06.2024**
(21) Numéro de dépôt: 19806259.8
(22) Date de dépôt: 25.11.2019
(51) Int. Cl.: A44C 5/24, G04B 37/14, A41H 1/02, A44C 5/02

(54) **PROCÉDÉ DE CONFIGURATION D'UN BRACELET DE MONTRE BRACELET**
KONFIGURATIONSVERFAHREN EINES ARMBANDS EINER ARMBANDUHR
METHOD FOR CONFIGURING A WRIST WATCH STRAP

(30) Priorité: 26.11.2018 EP 18208366
(43) Date de publication de la demande: 06.10.2021
(73) Titulaire: ROLEX SA, 1211 Genève 26 (CH)
(72) Inventeur: GROZEL, Clément, 74520 VALLEIRY (FR); HAEGY, Franck, 74270 CHILLY (FR); JAFFRÉ, Julien, 74420 HABÈRE-LULLIN (FR)
(74) Mandataire: Moinas & Savoye SARL
(86) Numéro de dépôt international: PCT/EP2019/082454
(87) Numéro de publication internationale: WO 2020/109246

(56) Documents cités:
- EP-A1- 3 017 715
- EP-A1- 3 449 755
- WO-A1-2016/161226
- CH-A1- 714 109
- US-A1- 2015 135 410
- US-A1- 2016 063 320

## Description

### Introduction

La présente invention concerne un procédé de détermination d'au moins une donnée morphologique d'un porteur de bracelet et un procédé de configuration d'un bracelet de montre bracelet, notamment de sa longueur. Elle porte aussi sur un système de configuration d'un bracelet mettant en oeuvre une partie dudit procédé.

### Etat de l'Art

Une opération importante pour le confort du porter d'une montre bracelet consiste à choisir la meilleure configuration possible du bracelet, et notamment de régler au mieux la longueur du bracelet. Naturellement, une première phase consiste le plus souvent à ajouter ou à retirer des mailles ou maillons de rallonge pour ajuster chaque brin de bracelet à la longueur la plus adaptée. Le résultat obtenu n'est généralement pas optimal. Pour cette raison, divers bracelets, notamment à fermoirs déployants, sont dotés de plusieurs dispositifs de réglage complémentaires.

En effet, dans un bracelet doté d'un fermoir déployant, le fermoir est en général doté d'un premier réglage de son positionnement relativement au bracelet, dit réglage conventionnel. En complément, des fermoirs déployants existants sont équipés d'une solution permettant la réalisation d'un deuxième réglage de la longueur du bracelet, aussi appelé réglage de confort, complémentaire avec le premier réglage conventionnel. Le document EP0819391 décrit, par exemple, une telle solution, qui repose sur un maillon de réglage agencé au sein du fermoir déployant qui pivote et peut occuper deux positions stables induisant deux longueurs différentes du bracelet. La position courte est maintenue par un cran d'un maillon d'extrémité du bracelet qui vient s'accrocher et se bloquer de manière élastique contre le maillon de réglage dans sa position courte. Une telle solution nécessite donc l'articulation de plusieurs maillons et l'accrochage d'un maillon pour garantir la stabilité de la position courte.

Finalement, il existe des solutions pour atteindre un réglage fin de la longueur d'un bracelet. En pratique, la circonférence du poignet du porteur devant recevoir le bracelet est mesurée à l'aide d'un ruban gradué, puis le bracelet est préparé selon cette donnée, avant plusieurs ajustements pouvant requérir plusieurs itérations jusqu'à atteindre a priori la configuration idéale ou optimale du bracelet. Cette mise en pratique repose souvent sur l'expérience d'un opérateur et peut s'avérer imprécise et fastidieuse.

En outre, il peut être nécessaire de prendre en compte d'autres données pour la configuration d'un bracelet, notamment s'il est équipé d'un fermoir, en particulier d'un fermoir déployant. Un fermoir déployant est prévu pour accrocher les deux brins d'un bracelet de montre autour du poignet de son porteur, et peut comprendre plusieurs lames articulées, qui peuvent occuper une première position de fermeture, dans laquelle une fonction d'accrochage est nécessaire pour stabiliser cette position de fermeture, et une deuxième position d'ouverture, dans laquelle il est possible de mettre ou de retirer le bracelet de montre du poignet. L'avantage d'un tel fermoir est qu'il prévient toute chute de la montre bracelet lors de son retrait, puisque les brins de bracelet restent continûment reliés. Toutefois, il est nécessaire que la dimension globale du bracelet lorsque le fermoir déployant est déployé, en position d'ouverture, soit adaptée au passage de la main. Il est donc dans ce cas utile de tenir compte aussi du pourtour de la main ou du « passage main », et non uniquement du poignet, comme cela sera détaillé par la suite.

Le document US2016/063320A1 décrit un procédé et un système de configuration d'un bracelet de montre bracelet.

Ainsi, l'invention a pour objectif général d'offrir une solution de configuration d'un bracelet de montre bracelet, notamment de détermination de la longueur d'un bracelet de montre bracelet, qui améliore les solutions existantes.

Plus particulièrement, l'invention recherche une solution de réglage de la longueur d'un bracelet de montre bracelet, adaptée à la morphologie de son porteur ainsi qu'optionnellement à ses préférences.

D'autre part, l'invention cherche une solution fiable et conviviale de configuration d'un bracelet.

### Brève description de l'invention

A cet effet, l'invention repose sur un procédé de configuration d'un bracelet de montre bracelet, caractérisé en ce qu'il comprend au moins les étapes suivantes :
- Une première étape d'acquisition d'au moins une donnée morphologique du porteur du bracelet à partir d'un système d'acquisition conformé pour réceptionner et éventuellement émettre des ondes de sorte à acquérir au moins une caractéristique morphologique du porteur du bracelet ;
- Une deuxième étape de préparation du bracelet du porteur, en prenant en compte la au moins une donnée morphologique acquise lors de la première étape d'acquisition.

La première étape d'acquisition peut comprendre l'acquisition d'une dimension, notamment une circonférence et/ou une hauteur et/ou une largeur, d'une portion de poignet du porteur qui est susceptible d'accueillir la montre bracelet et/ou d'une dimension, notamment une circonférence et/ou une hauteur et/ou une largeur, d'une portion de la main du porteur.

La première étape d'acquisition peut comprendre l'acquisition d'une dimension d'une portion de poignet du porteur qui est susceptible d'accueillir la montre bracelet et/ou d'une portion de la main du porteur par la mise en oeuvre de l'une des sous-étapes suivantes :
- indication par une interface homme machine représentant un modèle numérique obtenu par la première étape d'acquisition d'au moins une portion de poignet et/ou de main à considérer ; ou
- positionnement d'un pointeur sur le poignet et/ou la main du porteur lors de la première étape d'acquisition pour indiquer la au moins une portion à considérer ; ou
- détermination automatique par un calculateur de la au moins une portion du poignet et/ou de la main à considérer sur un modèle numérique obtenu par la première étape d'acquisition à partir de la mesure d'au moins une distance à partir d'un point identifié sur ledit modèle numérique, comme l'extrémité de la main ou une articulation du poignet.

La première étape d'acquisition peut comprendre une première opération d'acquisition d'au moins une caractéristique morphologique du porteur du poignet, et une deuxième opération de détermination de la au moins une donnée morphologique à partir de la au moins une caractéristique morphologique acquise lors de la première opération.

La première opération d'acquisition d'au moins une caractéristique morphologique peut comprendre l'acquisition d'au moins une caractéristique morphologique à partir d'un système d'acquisition doté d'au moins un capteur, comme une caméra, un laser ou un objectif, configuré pour scanner, photographier, ou filmer au moins une portion du poignet et/ou de la main du porteur.

La au moins une caractéristique morphologique peut comprendre un ou plusieurs modèles numériques d'une portion du poignet et/ou de la main du porteur ou des données sur le positionnement de plusieurs points d'une portion du poignet et/ou de la main du porteur.

La deuxième opération de détermination de la au moins une donnée morphologique peut comprendre le calcul d'une dimension à partir d'un ou plusieurs modèles numériques d'au moins une portion du poignet du porteur ou de la position de plusieurs points acquis par la première opération, et éventuellement un calcul par extrapolation pour d'éventuelles portions non acquises lors de la première opération.

Le procédé de configuration d'un bracelet de montre bracelet peut comprendre une étape d'acquisition d'au moins une donnée de préférence du porteur parmi lesquelles une donnée sur la manière dont le porteur souhaite que le bracelet enserre son poignet, et/ou une donnée sur les conditions de vie du porteur, comme notamment les conditions climatiques du lieu de vie du porteur et/ou d'au moins une éventuelle activité pratiquée par le porteur, et/ou une donnée sur la préférence du type de bracelet, et la deuxième étape de préparation du bracelet du porteur peut prendre en compte la au moins une donnée de préférence du porteur.

Le procédé de configuration d'un bracelet de montre bracelet peut comprendre une étape intermédiaire de détermination d'au moins une configuration optimale du bracelet adaptée au porteur, à partir de la au moins une donnée morphologique, de manière automatique par un programme informatique d'un système de configuration, la deuxième étape de préparation du bracelet du porteur étant réalisée selon une configuration optimale déterminée à l'étape intermédiaire de détermination.

Le procédé de configuration d'un bracelet peut comprendre une étape intermédiaire de détermination d'au moins une configuration optimale du bracelet adaptée au porteur, à partir de la au moins une donnée morphologique, qui comprend l'identification dans une base de données d'un système de configuration de données de configuration de bracelet les plus adaptées à la au moins une donnée morphologique.

L'étape intermédiaire de détermination de la au moins une configuration optimale du bracelet peut comprendre au moins la détermination du réglage de la longueur du bracelet.

L'étape intermédiaire de détermination de la au moins une configuration optimale du bracelet peut comprendre la détermination de données de configuration par tout ou partie des étapes suivantes :
- détermination du type du bracelet ; et/ou
- détermination du ou des brins et/ou du fermoir ; et/ou
- détermination du nombre de mailles ou maillons, notamment du nombre de mailles ou maillons de rallonge, pour au moins un brin de bracelet ; et/ou
- détermination de la ou des configurations d'au moins une maille ou d'au moins un maillon pour au moins un brin de bracelet ; et/ou
- détermination du positionnement d'un maillon d'extrémité d'un brin de bracelet relativement à un fermoir du bracelet et/ou relativement à une boîte de montre ; et/ou
- détermination du ou des configurations du fermoir du bracelet ; et/ou
- détermination du ou des réglages de longueur au sein du fermoir du bracelet.

L'invention porte aussi sur un système de configuration de bracelet de montre bracelet, caractérisé en ce qu'il comprend au moins un système d'acquisition d'un équipement d'au moins une donnée morphologique du porteur conformé pour réceptionner et éventuellement émettre des ondes de sorte à acquérir au moins une caractéristique morphologique du porteur du bracelet.

Le système d'acquisition d'un équipement comprend au moins un capteur, comme une caméra, un laser ou un objectif, configuré pour scanner, photographier, ou filmer au moins une portion du poignet et/ou de la main du porteur et comprend un calculateur configuré pour calculer au moins une donnée morphologique à partir d'au moins une caractéristique morphologique acquise par le système d'acquisition pour mettre en oeuvre le procédé de configuration de bracelet tel que décrit précédemment.

Le système d'acquisition d'un équipement peut comprendre une interface homme machine configurée pour recevoir la saisie d'au moins une donnée de préférence du porteur du bracelet.

L'invention porte aussi sur un équipement, caractérisé en ce qu'il est un téléphone portable de type smartphone ou une tablette ou des lunettes comprenant un système de configuration de bracelet tel que décrit précédemment.

L'invention porte aussi sur un procédé de fabrication d'une montre bracelet, caractérisé en ce qu'il comprend une étape de sélection d'une montre bracelet et/ou d'une boîte de montre et une étape de configuration d'un bracelet avantageusement sur la boîte de montre selon une configuration établie par un procédé de configuration d'un bracelet tel que décrit précédemment.

L'invention porte aussi sur un procédé de configuration d'un bracelet de montre bracelet pour un porteur donné, caractérisé en ce qu'il comprend les étapes suivantes :
- Une première étape d'acquisition d'au moins une donnée morphologique du porteur du bracelet ;
- Une étape intermédiaire de détermination automatique d'au moins une configuration optimale du bracelet adaptée au porteur, à partir de la au moins une donnée morphologique ;
- Une deuxième étape de préparation du bracelet du porteur, selon une configuration optimale déterminée à l'étape précédente.

L'invention est plus précisément définie par les revendications.

### Brève description des figures

Ces objets, caractéristiques et avantages de l'invention seront exposés en détail dans la description suivante d'un mode de réalisation particulier fait à titre non-limitatif en relation avec les figures jointes parmi lesquelles :
La figure 1 représente schématiquement les étapes d'un procédé de configuration d'un bracelet selon un mode de réalisation de l'invention.
La figure 2 représente une étape d'acquisition de données de morphologie du procédé de configuration de bracelet selon le mode de réalisation de l'invention.
La figure 3 représente une première opération d'une étape de détermination du procédé de configuration de bracelet selon le mode de réalisation de l'invention.
La figure 4 représente l'étape de détermination d'au moins une configuration optimale du bracelet du procédé de configuration de bracelet selon le mode de réalisation de l'invention.
La figure 5 représente une interface d'assistance d'une étape de préparation d'un bracelet du procédé de configuration de bracelet selon le mode de réalisation de l'invention.
La figure 6 représente une vue en perspective des maillons d'un brin de bracelet au cours de son réglage selon une étape du procédé de configuration de bracelet selon le mode de réalisation de l'invention.
La figure 7 représente une vue en perspective de dessous d'un fermoir au cours de son réglage selon une étape du procédé de configuration de bracelet selon le mode de réalisation de l'invention.
Les figures 8 et 9 représentent des vues d'un fermoir au cours de son réglage selon une étape du procédé de configuration de bracelet selon le mode de réalisation de l'invention.
La figure 10 représente une vue en perspective d'un fermoir déployant d'un bracelet configuré par le procédé de configuration de bracelet selon le mode de réalisation de l'invention.

Pour simplifier la description, nous utiliserons par convention les termes de « direction longitudinale » pour la direction selon la longueur d'un brin de bracelet ou d'un fermoir déployant, et de « direction transversale » pour la direction perpendiculaire, dans le plan d'un brin de bracelet, ou autrement dit la direction selon la largeur d'un brin de bracelet ou d'un fermoir. La direction verticale est la direction perpendiculaire aux deux premières directions, orientée perpendiculairement au plan d'un brin de bracelet. D'autre part, nous utiliserons le terme de « maille » pour un composant élémentaire d'un bracelet et le terme de « maillon » pour un assemblage de mailles. Par « bracelet », nous désignerons soit le bracelet dans son ensemble, fermoir compris ou non, soit l'un ou l'autre des brins du bracelet. D'autre part, les mêmes références seront utilisées dans les différents modes de réalisation pour désigner des éléments identiques ou similaires ou présentant les mêmes fonctions.

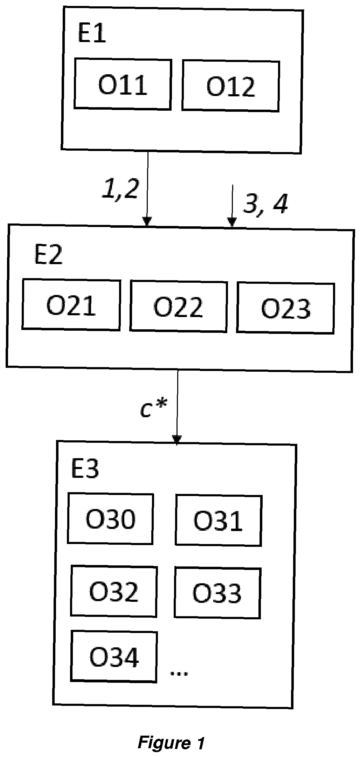

L'invention repose sur un procédé de configuration d'un bracelet, dont un mode de réalisation comprend les étapes et opérations représentées schématiquement par la figure 1.

Le procédé comporte une première étape d'acquisition E1 d'au moins une donnée morphologique du porteur de ladite montre bracelet. Le procédé comporte notamment une première étape d'acquisition E1 au moins partiellement automatique d'au moins une donnée morphologique du porteur de ladite montre bracelet.

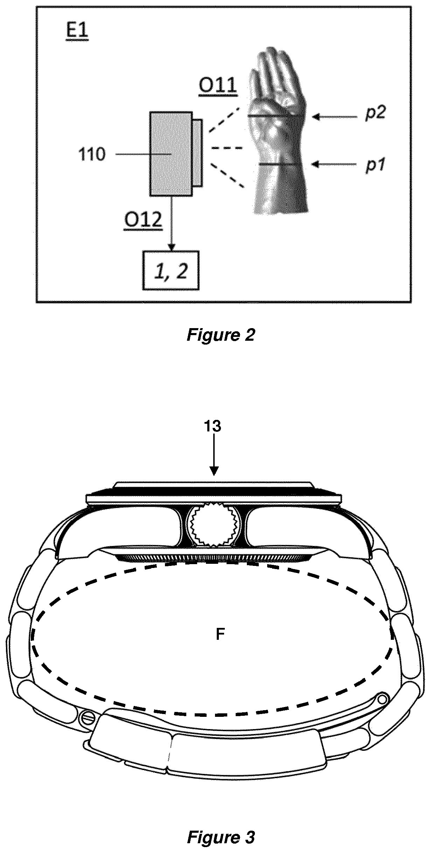

Cette donnée morphologique comprend une première dimension 1 du poignet, et peut notamment correspondre au tour de poignet du porteur destiné à accueillir la montre bracelet. Par « tour de poignet », nous entendons la circonférence d'une portion de poignet p1 qui est susceptible d'accueillir la montre bracelet, comme représenté par la figure 2. Cette première dimension peut en variante ou complément porter sur la hauteur et/ou la largeur de ladite portion de poignet p1. Selon une variante de réalisation avantageuse, au moins une deuxième donnée morphologique du porteur peut être acquise. Une deuxième donnée peut notamment correspondre à une deuxième dimension 2 correspondant au passage main du porteur, utile dans le cas d'un bracelet avec fermoir déployant. Par « passage main », nous entendons la zone de plus grande circonférence au niveau d'une portion de main p2, représentée par la figure 2, qui autorise le passage de la main dans le bracelet en position ouverte déployée du fermoir déployant. Cette deuxième dimension 2 peut donc comprendre la circonférence et/ou la hauteur et/ou la largeur de ladite portion de main p2.

En variante, d'autres données morphologiques pourraient être acquises et utilisées.

Selon un mode de réalisation, la première étape d'acquisition E1 d'au moins une donnée morphologique utilise un système d'acquisition 11 numérique d'un équipement 110 d'un système de configuration de bracelet, qui permet d'acquérir automatiquement au moins une caractéristique morphologique, dans une première opération O11 de la première étape d'acquisition E1. Par « caractéristique morphologique », nous entendons une donnée ou un ensemble de données numériques permettant d'obtenir, après un éventuel traitement, la au moins une donnée morphologique.

Le système d'acquisition 11 comprend par exemple une caméra, permettant d'obtenir une vidéo ou une ou plusieurs images de la morphologie du porteur, au niveau de son poignet, et éventuellement au niveau de sa main selon le mode de réalisation avantageux décrit. Plus généralement, dans une variante de réalisation avantageuse, le système d'acquisition 11 peut se présenter sous la forme d'un système d'imagerie doté d'au moins un capteur, par exemple un objectif, qui est prévu pour scanner, photographier, ou filmer au moins une portion du poignet p1 du porteur de sorte à acquérir et/ou à reconstruire au moins une image de ladite portion p1. Le système d'imagerie selon le mode de réalisation avantageux peut être aussi configuré pour scanner, photographier, ou filmer au moins une portion de la main p2 du porteur, de sorte à acquérir et/ou à reconstruire au moins une image de ladite portion p2. Encore plus généralement, le système d'acquisition 11 est un système conformé pour réceptionner et éventuellement émettre des ondes de sorte à acquérir au moins une caractéristique d'une portion du poignet p1 du porteur, et préférentiellement d'une portion de sa main p2. Ainsi, selon une variante de réalisation alternative du système d'acquisition 11, celui-ci peut, par exemple, comporter un dispositif muni d'au moins un laser, qui permet d'acquérir un ensemble de points formant le contour ou une portion de contour de ladite portion p1 du poignet du porteur et préférentiellement de ladite portion de sa main p2.

Selon le mode de réalisation, la première opération O11 permet d'abord au système d'acquisition 11 de déterminer la ou les portion(s) p1, p2 à considérer. Pour cela, une première variante consiste à transmettre une indication d'au moins une portion de poignet p1 et/ou de main p2 à considérer par une interface homme machine représentant un modèle numérique de l'extrémité du bras du porteur obtenu lors de cette première étape d'acquisition. En variante, un opérateur positionne un pointeur sur le poignet et/ou la main du porteur au préalable ou lors de l'acquisition numérique pour indiquer la au moins une portion à considérer. Le système d'acquisition obtient ainsi un modèle numérique de l'extrémité du bras du porteur sur lequel la ou les portions à considérer sont repérées et connues. Selon encore une autre variante, le système d'acquisition réalise une détermination automatique par un calculateur de la au moins une portion du poignet p1 et/ou de la main p2 à considérer sur un modèle numérique obtenu, par exemple à partir de la mesure d'au moins une distance à partir d'un point identifié sur ledit modèle numérique, comme l'extrémité de la main, comme par exemple l'extrémité du majeur, ou une articulation du poignet.

A l'issue de la première opération O11, le procédé met en oeuvre une deuxième opération 012 de l'étape d'acquisition E1, dans laquelle il détermine la au moins une donnée morphologique à partir de ladite ou desdites caractéristiques morphologiques obtenues lors de la première opération O11. Notamment, selon le mode de réalisation décrit, cette deuxième opération 012 permet de déterminer avec précision la circonférence et/ou une hauteur et/ou une largeur d'une portion du poignet p1 et la circonférence et/ou une hauteur et/ou une largeur d'une portion de main p2. Pour cela, la ou les caractéristiques découlant de la première opération O11 sont traitées, de préférence par un moyen logiciel du système d'acquisition ou de tout autre calculateur du système de configuration, par exemple dans une unité centrale, pour en déduire les dimensions 1, 2 formant les données morphologiques cherchées. Pour simplifier la description, ces dimensions 1, 2 seront assimilées aux données morphologiques 1, 2 par la suite.

Selon le mode de réalisation de l'invention, les caractéristiques morphologiques peuvent être une image, en deux dimensions ou en trois dimensions, de la portion du poignet p1 du porteur et de la portion de sa main p2. Plus généralement, ces caractéristiques morphologiques forment un modèle numérique d'une portion du poignet ou de la main du porteur ou des données numériques sur le positionnement, avantageusement tridimensionnel, de plusieurs points d'une portion du poignet ou d'une portion de la main. A partir de ces caractéristiques, le moyen logiciel est capable de calculer les données morphologiques cherchées. Ce calcul utilise par exemple un traitement d'images : si les caractéristiques comprennent suffisamment d'images pour visualiser la totalité du contour à mesurer pour obtenir une circonférence, le calcul consiste à additionner la longueur des différentes parties de ce contour obtenues séparément pour reconstituer la donnée morphologique cherchée. Si ces images sont insuffisantes pour figurer la totalité du contour, la portion manquante est calculée par extrapolation. Pour cela, des calculs géométriques sont mis en oeuvre. En variante, la ou les images sont suffisantes pour obtenir une hauteur et/ou une largeur de la portion du poignet p1 et/ou de la portion de la main p2. En complément, ces résultats peuvent aussi utiliser des paramètres obtenus par apprentissage. Le même principe est appliqué si les caractéristiques sont des points du contour à mesurer. A la fin de la deuxième opération 012, le procédé de configuration a ainsi pu élaborer automatiquement de manière fiable, automatique et rapide, les données morphologiques nécessaires pour la bonne configuration du bracelet.

Naturellement, les données morphologiques mentionnées dans ce mode de réalisation sont citées à titre d'exemples avantageux. Il est possible d'imaginer un autre mode de réalisation n'utilisant qu'une seule de ces données, ou au moins une autre donnée morphologique, combinée ou non avec une ou les données morphologiques du mode de réalisation décrit.

D'autre part, en complément des données morphologiques, d'autres données de préférence utiles à la configuration du bracelet peuvent être transmises au système de configuration de bracelet. Ces données peuvent notamment comprendre des préférences du porteur, notamment relative au porter du bracelet. Ces données de préférences du porteur de la montre comprennent par exemple des premières données de préférence 3 portant sur le ou les types de bracelet(s) souhaité(s), par exemple un bracelet métallique ou un bracelet souple, un bracelet avec ou sans fermoir déployant, notamment dans les limites offertes par le catalogue de montres bracelets proposées par le fabriquant.

Ces données de préférence peuvent aussi comprendre une ou plusieurs deuxièmes données de préférence 4 concernant la manière dont le porteur souhaite que le bracelet enserre son poignet, à savoir définissant le jeu plus ou moins conséquent qui subsiste entre le poignet et le bracelet, et portant éventuellement sur les conditions de vie du porteur, comme notamment les conditions climatiques du lieu de vie du porteur et/ou la pratique d'au moins une éventuelle activité par le porteur, comme les éventuels sports pratiqués par le porteur, qui sont susceptibles de faire varier la dimension 1 du poignet. Une deuxième donnée de préférence 4 peut notamment comporter une dimension 1', dérivée de la dimension 1 relative au poignet, qui permet d'adapter ladite dimension 1 liée à la portion de poignet p1 à une situation particulière différente de celle de l'opération O11, par exemple après une activité quelconque comme la pratique d'un sport. Cette dimension 1' peut, par exemple, être obtenue par le biais d'une analyse prédictive sur la base des données morphologiques 1, 2 et éventuellement des deuxièmes données de préférence 4. En variante, cette dimension 1' dérivée peut être obtenue par une lecture dans une base de données préétablie, notamment sur la base d'un sondage opéré par le fabriquant par ailleurs.

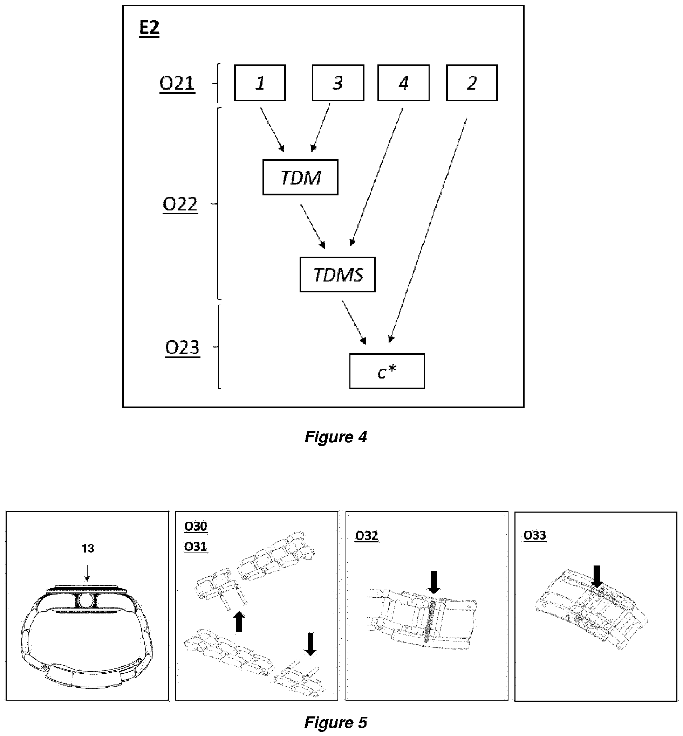

Le procédé de configuration de bracelet selon le mode de réalisation de l'invention met ensuite avantageusement en oeuvre, mais de manière optionnelle, une étape intermédiaire de détermination E2 d'au moins une configuration optimale du bracelet adaptée au porteur, dont un mode de réalisation va être décrit, en référence avec la figure 4. Cette étape est avantageusement en tout ou partie mise en oeuvre de manière automatique, comme cela va être décrit ci-après. En variante, cette étape pourrait être manuelle.

Dans une première opération 021 de cette étape intermédiaire de détermination E2, la ou les données morphologiques 1, 2 issues de la première étape E1, notamment les dimensions du poignet et de la main, sont transmises à une unité de calcul du système de configuration de bracelet, pour être traitées par un programme informatique d'un calculateur conçu pour fournir une configuration optimale c* de bracelet. Dans une variante manuelle, le vendeur pourrait simplement consulter la configuration optimale sur un abaque prédéfini.

Selon le mode de réalisation, les données de préférence 3, 4 du porteur sont de même transmises à l'unité de calcul du système de configuration de bracelet pour leur prise en compte.

La deuxième opération 022 de l'étape intermédiaire de détermination E2 comprend la détermination d'un tour de montre (TDM), correspondant à une forme globale d'un bracelet en position fermée et fixé à la boîte de montre, et qui est disposé autour d'une forme particulière F figurant une portion de poignet p1 du porteur, comme représenté par la figure 3. Le tour de montre (TDM) correspond ou correspond autant que faire se peut à la circonférence de la portion p1 du poignet et/ou à la hauteur et/ou à la largeur de la portion p1 du poignet du porteur.

Ainsi, la forme particulière F est conformée avantageusement pour correspondre au mieux à la portion de poignet p1 qui est susceptible d'accueillir la montre bracelet 13, et qui est connue par la ou les données morphologiques 1. La forme particulière F peut, par exemple, être elliptique ; les coefficients définissant l'ellipse sont adaptés pour correspondre au mieux à la hauteur et/ou à la largeur du poignet si ces données font partie des données morphologiques connues. En variante, une autre forme ovoïde pourrait être choisie, par exemple s'approchant plus d'un rectangle.

Le tour de montre obtenu par les considérations précédentes peut optionnellement être adapté par un coefficient pondérateur pour permettre à la montre bracelet de s'ajuster à la portion p1 du poignet avec un jeu optimal pour le confort du porteur. Ce coefficient pondérateur correspond ainsi au jeu considéré optimal. Il peut être une constante prédéfinie, ou peut être ajusté en tenant compte de la forme spécifique de la portion de poignet p1 du porteur. Par exemple, s'il existe une différence plus importante entre la forme particulière F et la forme de la portion de poignet p1, le coefficient pondérateur peut être augmenté. Ces calculs peuvent être effectués automatiquement par un calculateur d'une unité centrale du système de configuration, à partir de données numériques stockées sur une mémoire électronique associée.

Ensuite, selon le mode de réalisation de l'invention, le tour de montre obtenu précédemment à partir des seules données morphologiques est de nouveau adapté pour tenir compte des données de préférence du porteur. Le tour de montre obtenu précédemment peut ainsi donner lieu à la détermination d'un tour de montre souhaité (TDMS).

Notamment, les données de préférence peuvent comporter une information sur un souhait de porter la montre bracelet de manière ajustée ou lâche. En fonction de cette information de porter, le tour de montre est modifié par l'application d'un deuxième coefficient pondérateur, permettant d'augmenter ou de réduire le jeu autour du poignet. En complément, des données de préférence peuvent porter sur le lieu de vie ou l'activité du porteur, ce qui est pris en compte par l'application d'un autre coefficient pondérateur ou par un paramètre de configuration du bracelet qui prévoit une possibilité de réglage adaptée à la pratique d'une certaine activité. Dans ce dernier cas, la montre bracelet pourra être adaptée par un réglage d'une première configuration optimale du bracelet vers une deuxième configuration différente, optimale pour une activité spécifique.

Dans une troisième opération 023 de l'étape intermédiaire de détermination E2, la configuration réelle du bracelet est finalement déterminée, en fonction du tour de montre (TDM) ou du tour de montre souhaité (TDMS) établi précédemment. Cette opération 023 recherche une ou des configurations d'un bracelet qui correspond ou qui satisfait au mieux au tour de montre considéré. Pour cela, cette opération 023 comprend une itération dans une base de données de bracelets, notamment dans une base de données de données de configuration de bracelets, comprenant les données sur toutes ou une grande partie des configurations existantes d'un bracelet d'une montre bracelet déterminé selon les premières données de préférence 3, permettant de détecter une configuration optimale c* dudit bracelet la plus adaptée au tour de montre considéré. Cette configuration optimale est notamment choisie parmi les configurations qui permettent de centrer ou d'équilibrer au mieux la boîte et/ou le fermoir de montre sur la portion du poignet p1 du porteur. D'autre part, le programme vérifie, de plus, qu'en cas de présence d'un fermoir déployant, la configuration de bracelet retenue soit compatible avec la portion de main p2 en position ouverte du fermoir déployant. Le procédé définit ainsi automatiquement le compromis optimal entre le fait d'épouser de manière adéquate et confortable le poignet d'un porteur d'une montre bracelet et le fait d'offrir une ouverture suffisamment importante pour le passage de la main du porteur, quelles que soient les dimensions de la main et du poignet du porteur.

En remarque, cette opération 023 peut être répétée en fonction des premières données de préférence 3, et notamment des différents types de bracelets souhaités s'il en existe plusieurs. Ainsi, pour chaque type de bracelet compatible avec la boîte de montre choisie par le porteur, le programme peut tester les différentes possibilités offertes par chacun des bracelets, pour établir une configuration optimale pour chacun des bracelets. Ainsi, en fin d'itération, le programme peut optionnellement fournir une indication quant à une configuration optimale la plus en adéquation avec la ou les données morphologiques 1, 2 et éventuellement la ou les données de préférence 3, 4 parmi différentes configurations optimales de différents bracelets.

Autrement dit, en fin d'itération, le programme retient une configuration optimale d'un bracelet pour offrir le confort optimal au porteur. Le programme peut également retenir le ou les bracelets dont une configuration est la plus adaptée pour offrir le confort optimal au porteur.

Pour chaque type de bracelet considéré, le programme procède par itération en fonction des différentes possibilités renseignées dans la base de données de bracelets, pour tester les différentes possibilités de configuration de chaque bracelet et pour converger vers une configuration optimale. Parmi ces possibilités de configuration d'un type de bracelet donné, on peut mentionner :
- la détermination du fermoir, dans l'hypothèse où plusieurs fermoirs sont compatibles avec le type de bracelet donné ; et/ou
- la détermination du nombre de mailles ou de maillons, notamment du nombre de mailles ou de maillons de rallonge, pour chaque brin de bracelet, dans le cas où le type de bracelet est formé de mailles ou de maillons ; et/ou
- la détermination de la ou des configurations d'au moins une maille ou d'au moins un maillon pour au moins un brin de bracelet, dans le cas où cette au moins une maille ou cet au moins un maillon est susceptible de présenter plusieurs configurations ; et/ou
- la détermination du positionnement d'un maillon d'extrémité d'un brin de bracelet relativement à un fermoir du bracelet et/ou relativement à la boîte de montre choisie, notamment pour obtenir un réglage de longueur ; et/ou
- la détermination d'une ou des configurations du fermoir du bracelet, dans une situation où un fermoir considéré permet plusieurs configurations ; et/ou
- la détermination du ou des réglages de longueur au sein du fermoir du bracelet et/ou à l'interface avec la boîte de montre.

Finalement, si plusieurs types de bracelet présentent une configuration sensiblement équivalente et répondant aux caractéristiques du porteur, ils peuvent être proposés au porteur qui pourra faire le choix final du type de bracelet.

Dans une variante de réalisation de cette étape intermédiaire de détermination E2, l'unité de calcul du système de configuration de bracelets comprend une base de données de bracelets qui comprend une correspondance entre des données morphologiques, et éventuellement des données de préférence, et une configuration d'un type de bracelet. Ainsi, à partir de la connaissance des données provenant de la première étape d'acquisition, la deuxième opération 022 peut directement lire dans la base de données la ou les configurations de bracelet adaptées pour chaque type de bracelet. Dans cette variante, le programme du calculateur sélectionne, pour un modèle donné de boîte de montre choisie par le porteur, la ou les configuration(s) optimale(s) c* de bracelet-montre la (ou les) plus en adéquation avec la morphologie du porteur et éventuellement les préférences du porteur.

A la fin de l'étape intermédiaire de détermination E2, la ou les configuration(s) optimale(s) c* de bracelet-montre la (ou les) plus en adéquation avec la morphologie du porteur et éventuellement avec les préférences du porteur est (ou sont) communiquée(s) à l'horloger, au détaillant, ou au fabriquant, etc., et/ou au porteur par l'intermédiaire d'une interface homme machine du système de configuration de bracelets. Cette information transmise peut comprendre tous les détails concernant les réglages et options du type de bracelet retenu, parmi :
- Le ou les brins sélectionnés ; et/ou
- Le fermoir sélectionné ; et/ou
- Le ou les maillons ou mailles à ajouter et/ou à retirer sur l'un ou l'autre des brins ; et/ou
- Le ou les maillons ou mailles à configurer selon une configuration prédéfinie ; et/ou
- Le brin, notamment le ou les maillons ou mailles, à déplacer en regard du fermoir et/ou en regard de la boîte de montre ; et/ou
- Le réglage de longueur d'un maillon de réglage de longueur au sein d'un fermoir et/ou à l'interface avec une boîte de montre.

En remarque, l'étape intermédiaire de détermination E2 pourrait déterminer plusieurs configurations optimales, soit pour différents types de bracelet qui présenteraient une configuration optimale équivalente, soit pour un même bracelet mais selon différentes situations particulières d'utilisation.

Ensuite, le procédé de configuration d'un bracelet comprend une deuxième étape de préparation E3 du bracelet du porteur, selon une configuration optimale déterminée à l'étape précédente. Pour cela, l'horloger, ou tout individu qualifié pour procéder à la deuxième étape de préparation E3, effectue le montage final et/ou le réglage final de chaque brin de bracelet, à partir des informations précises déterminées et transmises en fin d'étape précédente. Du fait de cette dernière étape, le procédé de configuration de bracelet selon l'invention peut aussi être considéré comme étant la dernière étape d'un procédé de fabrication du bracelet, ou d'un procédé de montage ou de réglage d'un bracelet.

Selon une réalisation avantageuse, le système de configuration de bracelet présente une interface homme machine, telle que représentée par la figure 5, par laquelle il transmet une ou plusieurs images d'assistance à la configuration finale du bracelet.

Selon un mode de réalisation, le bracelet choisi pourra être transporté et stocké dans une configuration prédéfinie, auquel cas cette deuxième étape E3 consiste à modifier le bracelet de la configuration prédéfinie vers une configuration optimale établie à l'étape intermédiaire de détermination E2.

Dans cette deuxième étape, un horloger, ou tout individu qualifié pour procéder à la deuxième étape, peut, selon une première opération 030, sélectionner au moins un brin 6 de bracelet parmi n brins de différentes longueurs. Il peut également agir sur au moins un dispositif 5 de mise à longueur du bracelet. Il peut, par exemple, s'agir de moyens 51 permettant le montage ou le démontage d'une maille ou d'un maillon de rallonge d'un brin de bracelet, ou encore de moyens 52, 53 permettant de configurer une maille ou un maillon d'un brin dans une configuration donnée, ou la position d'un brin en regard d'un fermoir ou d'une boîte de montre, de sorte à ajuster au mieux la longueur dudit brin et plus généralement celle du bracelet.

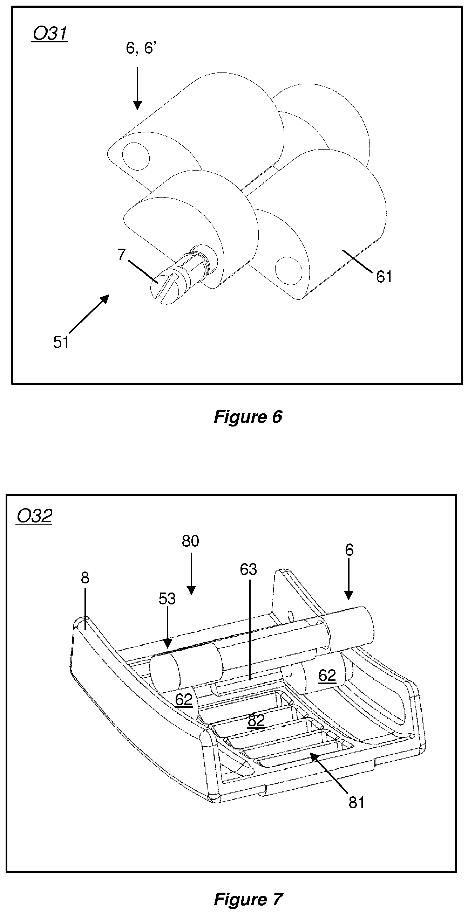

Dans le cas spécifique d'un bracelet du type métallique ou partiellement métallique muni de maillons, l'horloger peut, selon une deuxième opération 031 représentée par la figure 6, ajouter ou retirer des mailles ou maillons 61 sur un premier brin 6 de bracelet et/ou sur un deuxième brin 6' de bracelet, par exemple par le biais de moyens permettant un démontage/remontage aisé comme des vis 7, notamment des vis élastiques. Préférentiellement, cette deuxième opération 031 est mise en oeuvre exclusivement par l'horloger.

Selon une troisième opération 032, représentée par la figure 7, l'horloger peut positionner l'extrémité d'un brin 6 de bracelet dans une position prédéfinie en regard d'un couvercle 8 de fermoir déployant 80 par le biais d'un dispositif 53 permettant, par exemple, de maintenir un maillon 62 par le biais d'un système de crantage 81. Un tel système de crantage peut, par exemple, comporter un couvercle 8 muni d'une denture 82 d'indexation prévue pour coopérer avec un doigt 63 du brin 6. Un tel dispositif peut aussi bien être manipulé par l'horloger que par le porteur de la montre bracelet. Alternativement ou complémentairement, une maille ou un maillon peut être indexé relativement au couvercle de fermoir par le biais d'une barrette positionnable selon plusieurs positions prédéfinies du couvercle (dispositif non représenté).

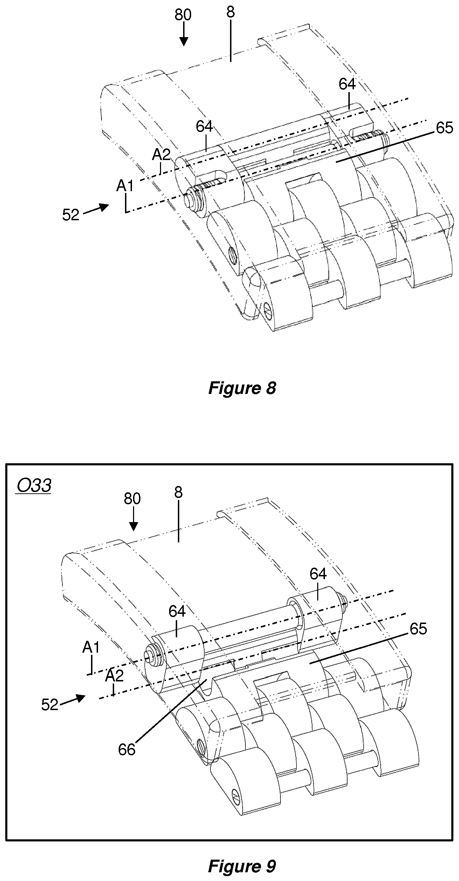

Selon une quatrième opération 033, représentée par la figure 9, l'horloger peut configurer une maille ou un maillon de rallonge selon une première ou une deuxième configuration de sorte à rallonger ou à raccourcir un premier et/ou un deuxième brin de bracelet. Par exemple, un maillon de réglage 64 est doté de deux axes d'articulation A1, A2 reliés respectivement au couvercle 8 du fermoir déployant 80 et à une maille d'extrémité 65 d'un brin 6 de bracelet. Le maillon de réglage 64 peut pivoter par rapport à son premier axe A1, relié au couvercle 8 du fermoir déployant 80, pour faire passer son deuxième axe A2, relié à la maille d'extrémité 65, de part et d'autre du premier axe A1 pour définir deux longueurs de bracelet déterminées. La maille d'extrémité 65, reliée au maillon de réglage 64, comporte un cran 66 qui permet, dans la position du maillon de réglage 64 correspondant à la configuration courte du bracelet, de venir se bloquer de manière élastique à l'encontre du maillon de réglage 64. La figure 8 illustre le dispositif en configuration courte du bracelet, tandis que la figure 9 illustre le dispositif en cours d'actionnement.

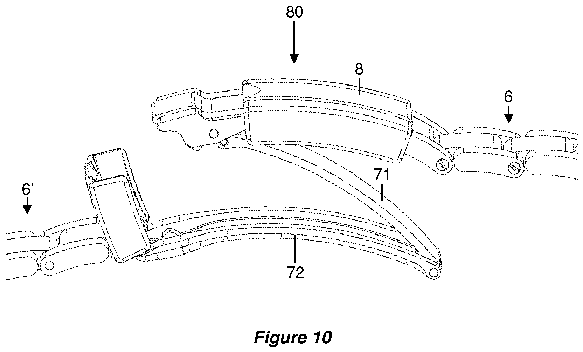

Une cinquième opération 034 de sélection d'un fermoir déployant 80 parmi n fermoirs de différentes tailles peut également avoir lieu. Par exemple, dans le cas d'un fermoir déployant muni de lames 71, 72 comme illustré par la figure 10, différentes tailles de lames peuvent être prévues de sorte à s'adapter au mieux à la morphologie du porteur de la montre. Un tel fermoir déployant peut comporter deux lames. Alternativement, il peut comporter plus de deux lames, par exemple trois lames, dans le but d'obtenir un déploiement maximisé pour permettre la mise en place de la montre-bracelet ou le retrait de la montre-bracelet quelle que soit la taille de la main du porteur, notamment de la portion de main p2 du porteur. Complémentairement ou alternativement, un tel fermoir peut comporter au moins une lame dont au moins une partie est susceptible de présenter deux configurations prédéfinies lors de la manipulation dudit fermoir, de sorte à favoriser le passage de la main du porteur, notamment de la portion de main p2 du porteur.

Une telle opération peut éventuellement préfigurer l'une ou l'autre des opérations 031, 032, 033.

Bien entendu, toutes ces opérations sont facultatives et ne sont pas nécessairement hiérarchisées. Ainsi, l'horloger, pour passer d'une configuration prédéfinie d'un bracelet-montre à une configuration optimale c* du bracelet, peut par exemple effectuer tout ou partie des opérations 030, 031, 032, 033, 034 décrites ci-dessus.

Le procédé n'est pas limité à un type de bracelet à maillons métalliques. Dans le cas d'un bracelet souple, dont les brins sont, par exemple, au moins partiellement constitués de cuir, d'élastomère, ou de textile, la première opération 030 de sélection d'au moins un brin parmi n brins de différentes longueurs peut avantageusement être mise en oeuvre avant toute autre opération. Tout ou partie des opérations 031, 032, 033, 034 peut également être effectuée, mais pas nécessairement. Notamment, une extrémité d'un brin souple peut être positionnée selon une position prédéfinie en regard d'un fermoir, en particulier d'un couvercle de fermoir déployant. Ces brins souples peuvent se réduire à une unité. Alternativement, ils peuvent être reliés à un fermoir déployant par le biais d'une ou de plusieurs mailles métalliques. Le fermoir d'un « bracelet souple » peut éventuellement comporter des lames et/ou un couvercle. Alternativement, le fermoir peut se réduire à une boucle, en particulier une boucle à ardillon (plus généralement à tout fermoir non déployant). Dans ce dernier cas, la deuxième étape de préparation E3 peut se réduire à faire coopérer l'ardillon avec un moyen comme un trou formé sur un brin préalablement identifié lors de l'étape intermédiaire de détermination E2 et sélectionné lors de la première opération 030.

L'invention porte aussi sur un système de configuration de bracelet qui met en oeuvre le procédé de configuration décrit précédemment. Ce système de configuration de bracelet comprend au moins un système d'acquisition 11 d'au moins une donnée morphologique et éventuellement un calculateur d'une unité de calcul qui met en oeuvre l'étape intermédiaire de détermination E2 telle que décrite précédemment, pour déterminer la configuration optimale du bracelet en fonction de la au moins une donnée morphologique acquise par le système d'acquisition 11.

Le système d'acquisition 11 est configuré pour réceptionner et éventuellement émettre des ondes de sorte à acquérir au moins une caractéristique morphologique du porteur du bracelet. Avantageusement, le système d'acquisition 11 comprend de plus au moins un capteur, comme une caméra, un laser ou un objectif, configuré pour scanner, photographier, ou filmer au moins une portion du poignet et/ou de la main du porteur. Par exemple, il peut s'agir d'une caméra infrarouge capable de saisir et/ou cartographier des points de l'avant-bras du porteur par projection permettant ainsi de former un modèle de l'avant-bras du porteur. Le système d'acquisition 11 peut de plus comprendre un calculateur configuré pour calculer au moins une donnée morphologique à partir d'au moins une caractéristique morphologique acquise par le système d'acquisition, selon le procédé décrit précédemment. Enfin, le système d'acquisition 11 peut comprendre une interface homme machine configurée pour recevoir la saisie d'au moins une donnée de préférence du porteur du bracelet. Cette interface homme machine peut aussi en variante afficher un modèle numérique de l'avant-bras du porteur, et lui permettre une éventuelle interaction, comme participer à la détection des portions de poignet p1 et de main p2 ou simplement pour afficher les portions repérées automatiquement. Ce système d'acquisition peut être lié à une unité centrale par un dispositif de communication. L'invention porte aussi sur un système d'acquisition en tant que tel, se présentant par exemple sous la forme d'un objet portable, caractérisé en ce qu'il comprend un calculateur configuré pour mettre en oeuvre au moins la première étape d'acquisition E1 du procédé décrit précédemment. Elle porte aussi sur un programme informatique comprenant des instructions qui, lorsque le programme est exécuté, conduisent celui-ci à mettre en oeuvre au moins ladite première étape d'acquisition E1.

De préférence, le système d'acquisition et l'unité centrale sont positionnés à proximité, ou au sein d'un même équipement. Ils peuvent partager un calculateur unique et commun. Ainsi, le système de configuration, ou au moins le système d'acquisition, forme un équipement 110 qui se présente avantageusement sous la forme d'un équipement compact facilement transportable et/ou pouvant être aisément installé dans les points de vente. Préférentiellement, cet équipement 110 se présente sous la forme d'un téléphone portable ou d'un « smartphone », d'une tablette, ou d'une paire de lunettes pouvant être manipulé par l'horloger ou le détaillant et accompagnant ainsi le porteur de la montre bracelet au sein d'une expérience d'achat particulièrement ludique et peu chronophage. En variante, il s'agit d'un équipement appartenant au porteur, lui permettant un achat à distance, en dehors d'un point de vente, par exemple à son domicile.

Comme mentionné précédemment, l'unité centrale qui met avantageusement en oeuvre l'étape intermédiaire de détermination E2 est avantageusement intégrée dans le même premier équipement 110 employé lors de la première étape E1. Alternativement, il peut s'agir d'une entité distincte, comme un ordinateur par exemple. Dans ce cas, le système d'acquisition est lié à cet ordinateur par un dispositif de communication pour la transmission, de préférence automatique, des données acquises et/ou traitées localement dans le système d'acquisition. Dans ce dernier cas, le premier équipement 110 employé lors de la première étape E1 peut notamment être un équipement appartenant au porteur, comme une tablette ou un « smartphone ». L'unité centrale qui met en oeuvre la deuxième étape E2 peut être présente localement sur un point de vente, ou peut être une unité distante, disposée chez le fabriquant par exemple, reliée par des dispositifs de communication à au moins un système d'acquisition.

Enfin, le système de configuration de bracelet comprend une ou plusieurs mémoires électroniques, notamment pour héberger les bases de données mentionnées dans la description du procédé. Cette ou ces mémoires électroniques sont donc reliées à l'unité centrale par un ou plusieurs dispositifs de communication. Une telle mémoire peut être intégrée dans un équipement compact formant le système de configuration, ou en variante être distante et reliée à l'unité centrale ou au système d'acquisition par un dispositif de communication.

Le procédé selon l'invention a été décrit dans un scénario permettant de configurer un bracelet dans une vente d'un modèle particulier de montre bracelet. Bien entendu, ce procédé peut être mis en oeuvre pour informer un porteur d'une montre bracelet d'une configuration optimale c* de son bracelet, même après l'achat ou indépendamment de l'achat de ladite montre bracelet.

De manière alternative, l'invention porte aussi sur un procédé de configuration d'un bracelet de montre bracelet pour un porteur donné, caractérisé en ce qu'il comprend les étapes suivantes :
- Une première étape d'acquisition d'au moins une donnée morphologique 1 ; 2 du porteur du bracelet ;
- Une étape intermédiaire de détermination automatique d'au moins une configuration optimale c* du bracelet adaptée au porteur, à partir de la au moins une donnée morphologique 1 ; 2 acquise à l'étape précédente ;
- Une deuxième étape de préparation du bracelet du porteur, selon une configuration optimale déterminée à l'étape précédente.

Dans cette alternative, l'étape intermédiaire de détermination correspond à l'étape intermédiaire de détermination décrite précédemment, mise en oeuvre de manière automatique.

Selon une variante de cette alternative, la première étape d'acquisition E1 du procédé peut être simplifiée. Par exemple, celle-ci peut être mise en oeuvre par le biais d'un système conventionnel de type ruban. Un tel ruban peut être rappelé par un dispositif élastique ou non. En alternative, le porteur peut déjà connaitre les données morphologiques à partir d'une mesure préalable, et simplement saisir ces données dans le système d'acquisition par une interface homme-machine.

Selon une réalisation particulière de cette alternative, l'opération 023 de l'étape intermédiaire peut être réalisée différemment. Par exemple, une mémoire électronique peut comprendre des données numériques correspondant à des règles de configuration associées à chaque brin de bracelet et/ou à chaque sous-composant d'un bracelet, comme une maille, un maillon et un fermoir. Ensuite, un algorithme permet, par itération, de former toutes les combinaisons de configurations possibles pour un bracelet donné, à partir de règles mémorisées, jusqu'à converger vers une configuration optimale. En variante, cette approche permet de former automatiquement la base de données de bracelets susmentionnées, dans laquelle sont mémorisées les configurations possibles.

Selon une autre réalisation particulière de cette alternative, l'étape intermédiaire de détermination peut tenir compte d'une configuration optimale d'une (ou de plusieurs) montre-bracelet déjà portée par le porteur. Dans ce cas, cette configuration optimale connue peut être saisie par le porteur, le détaillant, ou l'horloger, par l'intermédiaire d'une interface homme machine du système de configuration de bracelets. Ces informations peuvent éventuellement être exploitées pour obtenir le tour de montre à prendre en compte dans l'étape 022 explicitée précédemment. Ces informations peuvent ainsi servir de sources d'acquisition de données morphologiques du porteur ou équivalentes, conformément à une réalisation décrite précédemment en référence avec la première étape d'acquisition E1.

L'étape intermédiaire de détermination de la au moins une configuration optimale du bracelet peut comprendre au moins la détermination du réglage de la longueur du bracelet.

L'étape intermédiaire de détermination d'au moins une configuration optimale du bracelet peut comprendre l'identification dans une base de données de données de configuration de bracelet les plus adaptées à la au moins une donnée morphologique.

L'étape intermédiaire de détermination d'au moins une configuration optimale du bracelet peut comprendre la détermination de données de configuration par tout ou partie des étapes suivantes :
- détermination du type du bracelet ; et/ou
- détermination du ou des brins et/ou du fermoir ; et/ou
- détermination du nombre de mailles ou de maillons, notamment du nombre de mailles ou de maillons de rallonge, pour au moins un brin de bracelet ; et/ou
- détermination de la ou des configurations d'au moins une maille ou d'au moins un maillon pour au moins un brin de bracelet ; et/ou
- détermination du positionnement d'un maillon d'extrémité d'un brin de bracelet relativement à un fermoir du bracelet et/ou relativement à une boîte de montre ; et/ou
- détermination d'une ou des configurations du fermoir du bracelet ; et/ou
- détermination du ou des réglages de longueur au sein du fermoir du bracelet.

L'étape intermédiaire de détermination d'au moins une configuration optimale du bracelet peut comprendre une étape d'affichage sur un écran d'un système de configuration d'une configuration optimale déterminée.

L'étape intermédiaire de détermination d'au moins une configuration optimale du bracelet peut comprendre la prise en compte d'au moins une donnée de préférence du porteur parmi une donnée sur la manière dont le porteur souhaite que le bracelet enserre son poignet, et/ou une donnée sur les conditions de vie du porteur, comme notamment les conditions climatiques du lieu de vie du porteur et/ou au moins une éventuelle activité pratiquée par le porteur et/ou une donnée sur la préférence du type de bracelet.

L'étape intermédiaire de détermination d'au moins une configuration optimale du bracelet peut mettre en oeuvre un calcul de jeu autour du poignet du porteur en fonction de la au moins une donnée de préférence et/ou mettre en oeuvre un calcul de variation d'une donnée morphologique du porteur dans le temps à partir de la au moins une donnée de préférence.

La première étape d'acquisition d'au moins une donnée morphologique peut comprendre l'acquisition d'une dimension, notamment une circonférence et/ou une hauteur et/ou une largeur, d'une portion de poignet du porteur qui est susceptible d'accueillir la montre-bracelet et/ou d'une dimension, notamment une circonférence et/ou une hauteur et/ou une largeur, d'une portion de la main du porteur.

La première étape d'acquisition peut comprendre une première opération d'acquisition d'au moins une caractéristique morphologique du poignet du porteur, et une deuxième opération de détermination de la au moins une donnée morphologique à partir de la au moins une caractéristique morphologique acquise lors de la première opération.

La première opération d'acquisition d'au moins une caractéristique morphologique peut comprendre une étape d'acquisition à partir d'un système d'acquisition doté d'au moins un capteur, comme une caméra, un laser ou un objectif, configuré pour scanner, photographier, ou filmer au moins une portion du poignet et/ou de la main du porteur.

La première étape d'acquisition peut comprendre une saisie de la au moins une donnée morphologique par une interface homme machine ou la transmission de la au moins une donnée morphologique ou d'une donnée dérivée comme un tour de poignet à partir d'une mémoire électronique, notamment une base de donnée.

La deuxième étape de préparation du bracelet peut comprendre la modification du bracelet, notamment à partir d'une configuration standard, pour atteindre une configuration optimale c* du bracelet telle que déterminée par l'étape intermédiaire de détermination.

Dans cette alternative, l'invention porte aussi sur un système de configuration de bracelet, caractérisé en ce qu'il comprend au moins un système d'acquisition d'au moins une donnée morphologique et un calculateur qui met en oeuvre au moins l'étape intermédiaire de détermination d'au moins une configuration optimale c* du bracelet décrite précédemment, pour déterminer une configuration optimale du bracelet en fonction de la au moins une donnée morphologique acquise par le système d'acquisition 11.

Dans cette alternative, l'invention porte aussi sur un procédé de fabrication d'une montre bracelet, caractérisé en ce qu'il comprend une étape de sélection d'une montre bracelet ou d'une boîte de montre et une étape de configuration d'un bracelet sur la boîte de montre selon une configuration établie par un procédé de configuration d'un bracelet telle que décrite précédemment.

Dans cette alternative, l'invention porte aussi sur un dispositif de traitement de données, caractérisé en ce qu'il comprend un calculateur configuré pour mettre en oeuvre au moins l'étape intermédiaire de détermination d'au moins une configuration optimale c* du bracelet décrit précédemment, pour déterminer une configuration optimale du bracelet en fonction de la au moins une donnée morphologique acquise par le système d'acquisition 11.

Enfin, dans cette alternative, l'invention porte aussi sur un programme informatique comprenant des instructions qui, lorsque le programme est exécuté, conduisent celui-ci à mettre en oeuvre au moins l'étape intermédiaire de détermination d'au moins une configuration optimale c* du bracelet décrit précédemment, pour déterminer une configuration optimale du bracelet en fonction de la au moins une donnée morphologique acquise par le système d'acquisition 11.

## Revendications

1. Procédé de configuration d'un bracelet de montre bracelet pour un porteur donné, **caractérisé en ce qu'**il comprend les étapes suivantes :
- Une première étape d'acquisition (E1) d'au moins une donnée morphologique (1 ; 2) du porteur du bracelet ;
- Une étape intermédiaire de détermination (E2) automatique d'au moins une configuration optimale (c*) du bracelet adaptée au porteur, comprenant au moins la détermination du réglage de la longueur du bracelet, à partir de la au moins une donnée morphologique (1 ; 2), cette étape intermédiaire de détermination (E2) de la au moins une configuration optimale du bracelet comprenant la détermination de données de configuration par tout ou partie des étapes suivantes :
- détermination du type du bracelet ; et/ou
- détermination du ou des brins et/ou du fermoir ; et/ou
- détermination du nombre de mailles ou maillons, notamment du nombre de mailles ou maillons de rallonge, pour au moins un brin de bracelet ; et/ou
- détermination de la ou des configurations d'au moins une maille ou d'au moins un maillon pour au moins un brin de bracelet ; et/ou
- détermination du positionnement d'un maillon d'extrémité d'un brin de bracelet relativement à un fermoir du bracelet et/ou relativement à une boîte de montre ; et/ou
- détermination du ou des configurations du fermoir du bracelet ; et/ou
- détermination du ou des réglages de longueur au sein du fermoir du bracelet ;
- Une deuxième étape de préparation (E3) du bracelet du porteur, selon une configuration optimale déterminée à l'étape précédente.

2. Procédé de configuration d'un bracelet de montre bracelet selon la revendication précédente, **caractérisé en ce que** l'étape intermédiaire de détermination (E2) d'au moins une configuration optimale du bracelet adaptée au porteur, à partir de la au moins une donnée morphologique (1 ; 2), est réalisée de manière automatique par un programme informatique d'un système de configuration.

3. Procédé de configuration d'un bracelet selon l'une des revendications précédentes, **caractérisé en ce que** l'étape intermédiaire de détermination (E2) d'au moins une configuration optimale du bracelet adaptée au porteur, à partir de la au moins une donnée morphologique (1 ; 2) comprend l'identification dans une base de données d'un système de configuration de données de configuration de bracelet les plus adaptées à la au moins une donnée morphologique (1 ; 2).

4. Procédé de configuration d'un bracelet selon la revendication 2, **caractérisé en ce qu'**il met en oeuvre par un algorithme d'un moyen logiciel une itération, de sorte à former toutes les combinaisons de configurations possibles pour un bracelet donné, à partir de règles mémorisées dans une mémoire électronique, ces règles de configuration étant associées à chaque brin de bracelet et/ou à chaque sous-composant d'un bracelet, comme une maille, un maillon et un fermoir, jusqu'à converger vers une configuration optimale du bracelet.

5. Procédé de configuration d'un bracelet selon la revendication 2, **caractérisé en ce qu'**il met en oeuvre une configuration optimale du bracelet à partir d'une configuration d'une montre-bracelet déjà portée par le porteur, connue soit par une saisie par l'intermédiaire d'une interface homme machine du système de configuration de bracelets, soit par une consultation automatique d'une mémoire électronique sur laquelle est mémorisée cette information.

6. Procédé de configuration d'un bracelet selon l'une des revendications précédentes, **caractérisé en ce qu'**il comprend une étape d'affichage sur un écran d'un système de configuration d'une configuration optimale déterminée.

7. Procédé de configuration d'un bracelet de montre bracelet selon l'une des revendications précédentes, **caractérisé en ce que** la première étape d'acquisition (E1) comprend l'acquisition d'une dimension (1), notamment une circonférence et/ou une hauteur et/ou une largeur, d'une portion de poignet (p1) du porteur qui est susceptible d'accueillir la montre bracelet (13) et/ou d'une dimension (2), notamment une circonférence et/ou une hauteur et/ou une largeur, d'une portion de la main (p2) du porteur.

8. Procédé de configuration d'un bracelet de montre bracelet selon la revendication précédente, **caractérisé en ce que** la première étape d'acquisition (E1) comprend l'acquisition d'une dimension d'une portion de poignet (p1) du porteur qui est susceptible d'accueillir la montre bracelet (13) et/ou d'une portion de la main (p2) du porteur par la mise en oeuvre de l'une des sous-étapes suivantes :
- indication par une interface homme machine représentant un modèle numérique obtenu par la première étape d'acquisition (E1) d'au moins une portion de poignet et/ou de main à considérer ; ou
- positionnement d'un pointeur sur le poignet et/ou la main du porteur lors de la première étape d'acquisition (E1) pour indiquer la au moins une portion à considérer ; ou
- détermination automatique par un calculateur de la au moins une portion du poignet et/ou de la main à considérer sur un modèle numérique obtenu par la première étape d'acquisition (E1) à partir de la mesure d'au moins une distance à partir d'un point identifié sur ledit modèle numérique, comme l'extrémité de la main ou une articulation du poignet.

9. Procédé de configuration d'un bracelet de montre bracelet selon l'une des revendications précédentes, **caractérisé en ce que** la première étape d'acquisition (E1) comprend une première opération (O11) d'acquisition d'au moins une caractéristique morphologique du porteur du poignet, et une deuxième opération (012) de détermination de la au moins une donnée morphologique à partir de la au moins une caractéristique morphologique acquise lors de la première opération (O11).

10. Procédé de configuration d'un bracelet de montre bracelet selon la revendication précédente, **caractérisé en ce que** la première opération (O11) d'acquisition d'au moins une caractéristique morphologique comprend l'acquisition d'au moins une caractéristique morphologique à partir d'un système d'acquisition (11) doté d'au moins un capteur, comme une caméra, un laser ou un objectif, configuré pour scanner, photographier, ou filmer au moins une portion du poignet et/ou de la main du porteur.

11. Procédé de configuration d'un bracelet de montre bracelet selon l'une des revendications précédentes, **caractérisé en ce qu'**il comprend une étape d'acquisition d'au moins une donnée de préférence (3 ; 4) du porteur parmi lesquelles une donnée sur la manière dont le porteur souhaite que le bracelet enserre son poignet, et/ou une donnée sur les conditions de vie du porteur, comme notamment les conditions climatiques du lieu de vie du porteur et/ou d'au moins une éventuelle activité pratiquée par le porteur, et/ou une donnée sur la préférence du type de bracelet, et **en ce que** la deuxième étape de préparation (E3) du bracelet du porteur prend en compte la au moins une donnée de préférence du porteur.

12. Système de configuration de bracelet de montre bracelet, **caractérisé en ce qu'**il comprend au moins un système d'acquisition (11) d'au moins une donnée morphologique du porteur conformé pour réceptionner et éventuellement émettre des ondes de sorte à acquérir au moins une caractéristique morphologique du porteur du bracelet, ledit système d'acquisition (11) comprenant au moins un capteur, comme une caméra, un laser ou un objectif, configuré pour scanner, photographier, ou filmer au moins une portion du poignet et/ou de la main du porteur et **en ce qu'**il comprend un calculateur configuré pour calculer au moins une donnée morphologique à partir d'au moins une caractéristique morphologique acquise par le système d'acquisition (11), le système de configuration étant configuré pour mettre en oeuvre le procédé de configuration de bracelet selon l'une des revendications précédentes.

13. Système de configuration de bracelet de montre bracelet selon la revendication précédente, **caractérisé en ce que** le système d'acquisition (11) comprend une interface homme machine configurée pour recevoir la saisie d'au moins une donnée de préférence du porteur du bracelet et/ou la saisie d'au moins une donnée morphologique du porteur du bracelet.

14. Système de configuration de bracelet de montre bracelet selon l'une des revendications 12 ou 13, **caractérisé en ce qu'**il est système portable ou non, et/ou **en ce qu'**il est intégré à un téléphone portable de type smartphone ou à une tablette ou à des lunettes ou à un équipement comprenant une première portion (111) de forme sensiblement annulaire ou elliptique qui comprend plusieurs émetteurs/récepteurs, pour enrober une portion du poignet (p1) et/ou une portion de main (p2), de sorte à acquérir automatiquement au moins une caractéristique morphologique d'au moins une de ces deux portions.

15. Procédé de fabrication d'une montre bracelet, **caractérisé en ce qu'**il comprend une étape de sélection d'une montre bracelet et/ou d'une boîte de montre et une étape de configuration d'un bracelet sur la boîte de montre selon une configuration établie par un procédé de configuration d'un bracelet selon l'une des revendications 1 à 11.

## Patentansprüche

1. Verfahren zur Konfiguration eines Armbanduhr-Armbands für einen gegebenen Träger, **dadurch gekennzeichnet, dass** es die folgenden Schritte enthält:
- einen ersten Schritt (E1) der Erfassung mindestens eines morphologischen Datenwerts (1; 2) des Trägers des Armbands;
- einen Zwischenschritt (E2) der automatischen Bestimmung mindestens einer an den Träger angepassten optimalen Konfiguration (c*) des Armbands, der mindestens die Bestimmung der Einstellung der Länge des Armbands ausgehend von dem mindestens einen morphologischen Datenwert (1; 2) enthält, wobei dieser Zwischenschritt (E2) der Bestimmung der mindestens einen optimalen Konfiguration des Armbands die Bestimmung von Konfigurationsdaten durch alle oder einen Teil der folgenden Schritte enthält:
- Bestimmung des Typs des Armbands; und/oder
- Bestimmung des Teilbands oder der Teilbänder und/oder der Schließe; und/oder
- Bestimmung der Anzahl von Maschen oder Gliedern, insbesondere der Anzahl von Verlängerungsmaschen oder - gliedern, für mindestens ein Armband-Teilband; und/oder
- Bestimmung der Konfiguration oder der Konfigurationen mindestens einer Masche oder mindestens eines Glieds für mindestens ein Armband-Teilband; und/oder
- Bestimmung der Positionierung eines Endglieds eines Armband-Teilbands bezüglich einer Schließe des Armbands und/oder bezüglich eines Uhrengehäuses; und/oder
- Bestimmung der Konfiguration oder der Konfigurationen der Schließe des Armbands; und/oder
- Bestimmung der Längeneinstellung(en) innerhalb der Schließe des Armbands;
- einen zweiten Schritt (E3) der Vorbereitung des Armbands des Trägers gemäß einer im vorhergehenden Schritt bestimmten optimalen Konfiguration.

2. Konfigurationsverfahren eines Armbanduhr-Armbands nach dem vorhergehenden Anspruch, **dadurch gekennzeichnet, dass** der Zwischenschritt (E2) der Bestimmung (E2) mindestens einer an den Träger angepassten optimalen Konfiguration des Armbands ausgehend von dem mindestens einen morphologischen Datenwert (1; 2) von einem EDV-Programm eines Konfigurationssystems automatisch durchgeführt wird.

3. Konfigurationsverfahren eines Armbands nach einem der vorhergehenden Ansprüche, **dadurch gekennzeichnet, dass** der Zwischenschritt (E2) der Bestimmung mindestens einer an den Träger angepassten optimalen Konfiguration des Armbands ausgehend von dem mindestens einen morphologischen Datenwert (1; 2) die Identifizierung von Armband-Konfigurationsdaten in einer Datenbank eines Konfigurationssystems enthält, die am besten an den mindestens einen morphologischen Datenwert (1; 2) angepasst sind.

4. Konfigurationsverfahren eines Armbands nach Anspruch 2, **dadurch gekennzeichnet, dass** es durch einen Algorithmus einer Softwareeinrichtung eine Iteration durchführt, um alle Kombinationen von möglichen Konfigurationen für ein gegebenes Armband zu bilden, ausgehend von in einem elektronischen Speicher gespeicherten Regeln, wobei diese Konfigurationsregeln jedem Armband-Teilband und/oder jeder Teilkomponente eines Armbands, wie einer Masche, einem Glied und einer Schließe, zugeordnet sind, bis sie auf eine optimale Konfiguration des Armbands hinauslaufen.

5. Konfigurationsverfahren eines Armbands nach Anspruch 2, **dadurch gekennzeichnet, dass** es eine optimale Konfiguration des Armbands ausgehend von einer Konfiguration einer von dem Träger bereits getragenen Armbanduhr durchführt, bekannt entweder durch eine Eingabe mittels einer Mensch-Maschine-Schnittstelle des Armbänder-Konfigurationssystems, oder durch eine automatische Abfrage eines elektronischen Speichers, auf dem diese Information gespeichert ist.

6. Konfigurationsverfahren eines Armbands nach einem der vorhergehenden Ansprüche, **dadurch gekennzeichnet, dass** es einen Schritt der Anzeige einer bestimmten optimalen Konfiguration auf einem Bildschirm eines Konfigurationssystems enthält.

7. Konfigurationsverfahren eines Armbanduhr-Armbands nach einem der vorhergehenden Ansprüche, **dadurch gekennzeichnet, dass** der erste Erfassungsschritt (E1) die Erfassung einer Abmessung (1), insbesondere eines Umfangs und/oder einer Höhe und/oder einer Breite eines Handgelenkabschnitts (p1) des Trägers, der die Armbanduhr (13) möglicherweise erhält, und/oder einer Abmessung (2), insbesondere eines Umfangs und/oder einer Höhe und/oder einer Breite eines Abschnitts der Hand (p2) des Trägers enthält.

8. Konfigurationsverfahren eines Armbanduhr-Armbands nach dem vorhergehenden Anspruch, **dadurch gekennzeichnet, dass** der erste Erfassungsschritt (E1) die Erfassung einer Abmessung eines Handgelenkabschnitts (p1) des Trägers, der die Armbanduhr (13) möglicherweise erhält, und/oder eines Abschnitts der Hand (p2) des Trägers durch die Anwendung eines der folgenden Teilschritte enthält:
- Anzeige durch eine Mensch-Maschine-Schnittstelle, die ein durch den ersten Erfassungsschritt (E1) erhaltenes digitales Modell darstellt, mindestens eines zu berücksichtigenden Abschnitts eines Handgelenks und/oder einer Hand; oder
- Positionierung eines Zeigers auf dem Handgelenk und/oder auf der Hand des Trägers im ersten Erfassungsschritt (E1), um den mindestens einen zu berücksichtigenden Abschnitt anzuzeigen; oder
- automatische Bestimmung durch einen Rechner des mindestens einen zu berücksichtigenden Abschnitts des Handgelenks und/oder der Hand auf einem durch den ersten Erfassungsschritt (E1) erhaltenen digitalen Modell ausgehend von der Messung mindestens eines Abstands ausgehend von einem auf dem digitalen Modell identifizierten Punkt als dem Ende der Hand oder einem Gelenk des Handgelenks.

9. Konfigurationsverfahren eines Armbanduhr-Armbands nach einem der vorhergehenden Ansprüche, **dadurch gekennzeichnet, dass** der erste Erfassungsschritt (E1) eine erste Operation (O11) der Erfassung mindestens eines morphologischen Merkmals des Trägers des Handgelenks und eine zweite Operation (012) der Bestimmung des mindestens einen morphologischen Datenwerts ausgehend von dem mindestens einen bei der ersten Operation (O11) erfassten morphologischen Merkmal enthält.

10. Konfigurationsverfahren eines Armbanduhr-Armbands nach dem vorhergehenden Anspruch, **dadurch gekennzeichnet, dass** die erste Operation (O11) der Erfassung mindestens eines morphologischen Merkmals die Erfassung mindestens eines morphologischen Merkmals ausgehend von einem Erfassungssystem (11) enthält, das mit mindestens einem Sensor, wie einer Kamera, einem Laser oder einem Objektiv, ausgestattet ist, der konfiguriert ist, mindestens einen Abschnitt des Handgelenks und/oder der Hand des Trägers zu scannen, zu fotografieren oder zu filmen.

11. Konfigurationsverfahren eines Armbanduhr-Armbands nach einem der vorhergehenden Ansprüche, **dadurch gekennzeichnet, dass** es einen Schritt der Erfassung mindestens eines Vorzugsdatenwerts (3; 4) des Trägers enthält, darunter ein Datenwert über die Art und Weise, wie der Träger wünscht, dass das Armband sein Handgelenk umschließt, und/oder ein Datenwert über die Lebensbedingungen des Trägers, wie insbesondere die Klimabedingungen des Lebensraums des Trägers und/oder mindestens eine mögliche vom Träger ausgeübte Aktivität, und/oder ein Datenwert über die Bevorzugung des Armbandtyps, und dass der zweite Schritt (E3) der Vorbereitung des Armbands des Trägers den mindestens einen Vorzugsdatenwert des Trägers berücksichtigt.

12. Konfigurationssystem eines Armbanduhr-Armbands, **dadurch gekennzeichnet, dass** es mindestens ein Erfassungssystem (11) mindestens eines morphologischen Datenwerts des Trägers enthält, das gestaltet ist, um Wellen zu empfangen und ggf. zu senden, um mindestens ein morphologisches Merkmal des Trägers des Armbands zu erfassen, wobei das Erfassungssystem (11) mindestens einen Sensor, wie eine Kamera, einen Laser oder ein Objektiv, enthält, der konfiguriert ist, mindestens einen Abschnitt des Handgelenks und/oder der Hand des Trägers zu scannen, zu fotografieren oder zu filmen, und dass es einen Rechner enthält, der konfiguriert ist, mindestens einen morphologischen Datenwert ausgehend von mindestens einem vom Erfassungssystem (11) erfassten morphologischen Merkmal zu berechnen, wobei das Konfigurationssystem konfiguriert ist, das Armband-Konfigurationsverfahren nach einem der vorhergehenden Ansprüche durchzuführen.

13. Konfigurationssystem eines Armbanduhr-Armbands nach dem vorhergehenden Anspruch, **dadurch gekennzeichnet, dass** das Erfassungssystem (11) eine Mensch-Maschine-Schnittstelle enthält, die konfiguriert ist, die Eingabe mindestens eines Vorzugsdatenwerts des Trägers des Armbands und/oder die Eingabe mindestens eines morphologischen Datenwerts des Trägers des Armbands zu empfangen.

14. Konfigurationssystem eines Armbanduhr-Armbands nach einem der Ansprüche 12 oder 13, **dadurch gekennzeichnet, dass** es ein tragbares oder nicht tragbares System ist, und/oder dass es in ein Mobiltelefon vom Typ Smartphone oder in ein Tablet oder in eine Brille oder in eine Ausrüstung integriert ist, die einen ersten Abschnitt (111) von im Wesentlichen kreisförmiger oder elliptischer Form enthält, der mehrere Sender/Empfänger enthält, um einen Abschnitt des Handgelenks (p1) und/oder einen Handabschnitt (p2) zu umhüllen, um automatisch mindestens ein morphologisches Merkmal mindestens eines dieser zwei Abschnitte zu erfassen.

15. Herstellungsverfahren einer Armbanduhr, **dadurch gekennzeichnet, dass** es einen Schritt der Auswahl einer Armbanduhr und/oder eines Uhrengehäuses und einen Schritt der Konfiguration eines Armbands auf dem Uhrengehäuse gemäß einer durch ein Konfigurationsverfahren eines Armbands nach einem der Ansprüche 1 bis 11 erstellten Konfiguration enthält.

## Claims

1. A method for configuring a wristwatch wriststrap for a given wearer, **characterized in that** it comprises the following steps:
- a first step (E1) of acquiring at least one morphological data item (1; 2) pertaining to the wearer of the wriststrap;
- an intermediate step (E2) of automatically determining at least one optimal configuration (c*) for the wriststrap suited to the wearer, comprising at least determining the strap length adjustment, from the at least one morphological data item (1; 2), this intermediate step (E2) of determining the at least one optimal configuration for the wriststrap comprising determining configuration data using all or some of the following steps:
- determining the type of wriststrap; and/or
- determining the strand or strands and/or the clasp; and/or
- determining the number of links or linkages, notably the number of extension linkages or links, for at least one strand of the wriststrap; and/or
- determining the configuration or configurations of at least one link or of at least one linkage for at least one wriststrap strand; and/or
- determining the positioning of an end linkage of a wriststrap strand relative to a wriststrap clasp and/or relative to a watch case; and/or
- determining one or more configurations of the wriststrap clasp; and/or
- determining the length adjustment or adjustments within the wriststrap clasp;
- a second step (E3) of preparing the wriststrap for the wearer, to an optimal configuration determined in the preceding step.

2. The method for configuring a wristwatch wriststrap as claimed in the preceding claim, **characterized in that** the intermediate step (E2) of determining at least one optimal configuration of the wriststrap suited to the wearer, from the at least one morphological data item (1; 2), is performed automatically using a computer program of a configuration system.

3. The method for configuring a wriststrap as claimed in either of the preceding claims, **characterized in that** the intermediate step (E2) of determining at least one optimal configuration of the wriststrap suited to the wearer, from the at least one morphological data item (1; 2), comprises identifying in a database of a configuration system wriststrap configuration data best suited to the at least one morphological data item (1; 2).

4. The method for configuring a wriststrap as claimed in claim 2, **characterized in that** it implements, using an algorithm of a software means, an iteration so as to form all the possible combinations of configurations for a given wriststrap, from rules stored in an electronic memory, these configuration rules being associated with each wriststrap strand and/or with each subcomponent of a wriststrap, such as a link, a linkage and a clasp, until it converges upon an optimal configuration of the wriststrap.

5. The method for configuring a wriststrap as claimed in claim 2, **characterized in that** it implements an optimal configuration of the wriststrap from a configuration of a wristwatch already worn by the wearer, known either from a capture via a man-machine interface of the wriststrap configuration system, or from an automatic consultation of an electronic memory in which said information is stored.

6. The method for configuring a wriststrap as claimed in one of the preceding claims, **characterized in that** it comprises a step of displaying a determined optimal configuration on a screen of a configuration system.

7. The method for configuring a wristwatch wriststrap as claimed in one of the preceding claims, **characterized in that** the acquisition first step (E1) comprises the acquisition of a dimension (1), notably a circumference and/or a height and/or a width, of a wearer wrist portion (p1) likely to accommodate the wristwatch (13) and/or of a dimension (2), notably a circumference and/or a height and/or a width, of a wearer hand portion (p2).

8. The method for configuring a wristwatch wriststrap as claimed in the preceding claim, **characterized in that** the acquisition first step (E1) comprises the acquisition of a dimension of a wearer wrist portion (p1) which is likely to accommodate the wristwatch (13) and/or of a wearer hand portion (p2) by implementing one of the following substeps:
- indication by a man-machine interface representing a digital model obtained by the acquisition first step (E1) of at least one wrist and/or hand portion to be considered; or
- positioning of an indicator on the wrist and/or the hand of the wearer during the acquisition first step (E1) to indicate the at least one portion to be considered; or
- automatic determination by a computer of the at least one wrist and/or hand portion to be considered on a digital model obtained by the acquisition first step (E1) from the measurement of at least a distance from a point identified on said digital model, such as the end of the hand or a joint in the wrist.

9. The method for configuring a wristwatch wriststrap as claimed in one of the preceding claims, **characterized in that** the acquisition first step (E1) comprises a first operation (O11) of acquiring at least one morphological characteristic of the wearer of the wrist, and a second operation (012) of determining the at least one morphological data item from the at least one morphological characteristic acquired during the first operation (011).

10. The method for configuring a wristwatch wriststrap as claimed in the preceding claim, **characterized in that** the first operation (O11) of acquiring at least one morphological characteristic comprises the acquisition of at least one morphological characteristic from an acquisition system (11) provided with at least one sensor, such as a camera, a laser or a lens, configured to scan, photograph or film at least one portion of the wrist and/or of the hand of the wearer.

11. The method for configuring a wristwatch wriststrap as claimed in one of the preceding claims, **characterized in that** it comprises a step of acquiring at least one wearer preference data item (3; 4) including a data item pertaining to the way in which the wearer wishes the wriststrap to encircle his wrist, and/or a data item pertaining to the lifestyle of the wearer, such as, in particular, the weather conditions where the wearer lives and/or pertaining to at least one activity in which the wearer may participate, and/or a data item pertaining to the preference as to type of wriststrap, and **in that** the second step (E3) of preparing the wriststrap for the wearer takes the at least one wearer preference data item into consideration.

12. A system for configuring a wristwatch wriststrap, **characterized in that** it comprises at least one system (11) for acquiring at least one morphological data item pertaining to the wearer set up to receive and possibly emit waves so as to acquire at least one morphological characteristic of the wearer of the wriststrap, said acquisition system (11) comprising at least one sensor, such as a camera, a laser or a lens, configured to scan, photograph or film at least one portion of the wrist and/or of the hand of the wearer and **in that** it comprises a computer configured to calculate at least one morphological data item from at least one morphological characteristic acquired by the acquisition system (11), the system for configuring being configured for implementing the wriststrap configuration method as claimed in one of the preceding claims.

13. The system for configuring a wristwatch wriststrap as claimed in the preceding claim, **characterized in that** the acquisition system (11) comprises a man-machine interface configured to receive the input of at least one wriststrap wearer preference data item and/or the input of at least one wriststrap wearer morphological data item.

14. The system for configuring a wristwatch wriststrap as claimed in either of claims 12 and 13, **characterized in that** it is a portable or nonportable system and/or **in that** it is integrated into a mobile telephone of the smartphone type or integrated into a tablet or spectacles or into equipment comprising a first portion (111) of substantially annular or elliptical shape which comprises several emitters/receivers to encompass a wrist portion (p1) and/or a hand portion (p2) so as to automatically acquire at least one morphological characteristic of at least one of these two portions.

15. A method for manufacturing a wristwatch, **characterized in that** it comprises a step of selecting a wristwatch and/or a watch case and a step of configuring a wriststrap on the watch case to a configuration established by a method for configuring a wriststrap as claimed in one of claims 1 to 11.
